(19) Europäisches Patentamt / European Patent Office / Office européen des brevets

(11) **EP 1 854 165 B3**

(12) **NOUVEAU FASCICULE DE BREVET EUROPEEN**
Après la procédure de limitation (B3-1)

(45) Mention de la délivrance du brevet:
**24.03.2010 Bulletin 2010/12**

(45) Date de publication et mention de la décision de limitation:
**B3-1 08.06.2016 Bulletin 2016/23**

(21) Numéro de dépôt: 06709396.3

(22) Date de dépôt: **10.01.2006**

(51) Int Cl.:
**H01M 10/44** (2006.01)

(86) Numéro de dépôt international:
**PCT/FR2006/050008**

(87) Numéro de publication internationale:
**WO 2006/075112 (20.07.2006 Gazette 2006/29)**

(54) **PROCEDE DE CHARGEMENT EQUILIBRE D'UNE BATTERIE LITHIUM-ION OU LITHIUM POLYMERE**

VERFAHREN ZUM AUSGEWOGENEN AUFLADEN EINER LITHIUMIONEN- ODER LITHIUM-POLYMER-BATTERIE

METHOD FOR THE BALANCED CHARGING OF A LITHIUM-ION OR LITHIUM-POLYMER BATTERY

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **14.01.2005 FR 0500423**

(43) Date de publication de la demande:
**14.11.2007 Bulletin 2007/46**

(73) Titulaire: **PELLENC (Société Anonyme)**
**84120 Pertuis (FR)**

(72) Inventeur: PELLENC, Roger
F-84120 Pertuis (FR)

(74) Mandataire: **Nuss, Pierre et al**
**Cabinet Nuss**
**10 Rue Jacques Kablé**
**67080 Strasbourg Cedex (FR)**

(56) Documents cités:
**GB-A- 2 372 645      US-A- 5 773 159**
**US-A- 5 773 959**

## Description

La présente invention concerne le domaine du chargement ou de la charge de batteries rechargeables, et a pour objet un procédé de chargement ou de charge équilibré, dans le temps, des cellules d'une batterie lithium-ion ou lithium polymère.

Le chargement électrique optimisé de batteries comportant plusieurs cellules constitutives pose des problèmes difficiles à résoudre, notamment lorsque le nombre d'éléments ou de cellules mis(es) en série est élevé.

GB 2 372 645 et US 5 773 959 décrivent un dispositif de recharge de piles au lithium comprenant un système de contrôle de charge des cellules.

Dans le cas d'une batterie lithium-ion ou lithium polymère, s'ajoutent à ces problèmes d'optimisation de la charge des différent(e)s éléments ou cellules, des risques de détérioration irrémédiables desdits éléments ou desdites cellules en cas de surcharge, notamment par surchauffe ou surtension.

Il est connu, d'une part, que dans les batteries qui utilisent des éléments lithium-ion ou lithium polymère en série les performances en capacité de chaque élément ou cellule après charge ne sont pas identiques et que ces différences s'accroissent de cycle en cycle de charge et décharge jusqu'à la fin de vie de la batterie concernée.

On sait, d'autre part, que les batteries lithium-ion et lithium polymère n'acceptent pas de surcharge à l'occasion de la charge, ni de sous charge à l'occasion de l'utilisation (décharge). La valeur de tension maximum retenue, à titre d'exemple et non limitativement, pour la surcharge pour chacun des éléments d'une batterie lithium-ion et lithium polymère en série est de 4,20 volts et la tension retenue pour stopper la décharge, et éviter ainsi la dégradation de la batterie, est de 2,70 volts.

On sait également que, pour chacun(e) des éléments ou cellules lithium-ion ou lithium polymère, la tension aux bornes de l'élément ou de la cellule est l'image de la capacité emmagasinée dans l'élément ou la cellule considéré(e). Cette indication de tension ne donne pas la valeur précise de la capacité en ampère/heure ou en watt/heure, mais donne un pourcentage de la capacité de l'élément considéré au moment de la mesure de cette tension.

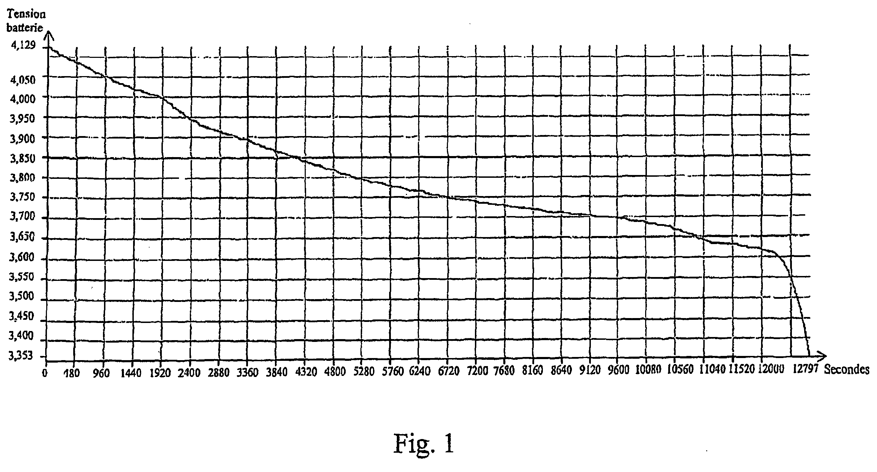

La figure 1 des dessins annexés représente une courbe montrant l'évolution de la tension aux bornes d'un élément lithium-ion par rapport à sa capacité (s'agissant d'une courbe de décharge à courant constant, le temps est proportionnel au pourcentage de la capacité stockée dans l'élément Lithium-ion considéré avec : 0 sec ⇒ 95 % (4,129 volts), 6 150 secondes ⇒ 50 % (3,760 volts) et 12 300 secondes ⇒ 0 % (3,600 volts). On remarque que sur une partie importante de cette courbe, la capacité est quasiment linéaire avant de se dégrader rapidement. Pour contrôler les opérations de charge et décharge d'un élément ou d'une cellule lithium-ion, on opère dans la partie quasiment linéaire ce qui permet d'affirmer que la tension est l'image de la capacité.

Compte tenu des indications développées dans les trois points précédents, on peut vérifier que, dans une batterie constituée de plus de trois à quatre éléments lithium-ion ou lithium polymère en série, la charge de la batterie sera arrêtée lorsque l'élément le plus chargé aura atteint 4,20 volts et, inversement, que lors de la décharge, on va arrêter celle-ci lorsque l'élément de moindre capacité aura atteint la tension de 2,70 volts : c'est donc l'élément qui a la capacité la plus faible qui détermine la capacité globale de la batterie. Ceci permet de comprendre que, lorsque la batterie a un nombre important d'éléments en série, le risque de ne pas exploiter la totalité de la capacité de la batterie est réel, puisque c'est l'élément le moins capacitif qui détermine de manière limitative la capacité totale de la batterie. En outre, ce phénomène s'aggrave avec l'accumulation des cycles charges/décharges.

Ce phénomène de déséquilibre de charge est essentiellement provoqué par les différences de capacité et de résistance interne entre les éléments constitutifs de la batterie, ces différences résultant de la variation de la qualité de fabrication des éléments lithium-ion ou lithium polymère.

Afin d'optimiser la capacité de la batterie dans le temps, ce qui est très important pour les coûts d'exploitation, il faut remédier au problème évoqué précédemment en réalisant, avant l'arrêt de la charge, un rééquilibrage de tous les éléments ou de toutes les cellules de la batterie. Cet équilibrage devrait permettre une charge à 100 % de tous les éléments quelle que soit leur capacité.

Dans la pratique de l'état de la technique actuel, cet équilibrage se fait en fin de charge, en dérivant le courant de charge de l'élément chargé à 100 %, c'est-à-dire lorsque celui-ci a atteint une tension de 4,20 volts. Ainsi, les éléments sont arrêtés au fur et à mesure qu'ils atteignent 4,20 volts et l'on obtient alors une charge à 100 % de tous les éléments en fin d'opération de charge.

Mais cette technique connue d'équilibrage en fin de charge présente de notables inconvénients.

Ainsi, ces systèmes d'équilibrage nécessitent des résistances de puissances importantes pour pouvoir dissiper des courants conséquents, et ceci d'autant plus que le système d'équilibrage entre en action lorsque les courants de charge sont encore importants, ce qui se produit lorsque les éléments de la batterie sont très déséquilibrés.

En outre, cette forte dissipation de puissance entraîne une élévation conséquente de la température, qui peut être gênante dans le cas de batteries compactes intégrant les résistances de dérivation.

De plus, il peut arriver que, malgré l'injection de courants de charge importants vers la fin de l'opération de charge, la batterie ne soit pas équilibrée lorsque la condition de fin de charge est remplie.

Par ailleurs, il faut également noter que les batteries lithium-ion ou lithium polymère peuvent potentiellement s'avérer dangereuses en fin de charge, compte tenu de leur nature et de la quantité d'énergie stockée, les cellules étant pratiquement chargées à leur niveau maximal.

En effet, l'application de courants de charge importants à ce stade et dans cette situation, pour équilibrer les cellules en retard de charge, entraîne une surchauffe des éléments concernés, qui peut aboutir à l'explosion de ces derniers dans les cas extrêmes.

Enfin, l'application de courants de charge de forte intensité accélère le vieillissement des cellules de la batterie et donc la diminution de leur performance.

Par ailleurs, dans les applications de forte puissance, les temps de recharge de la batterie, notamment de recharge complète, sont longs, voire très longs. Il arrive alors fréquemment que le temps de charge effectif entre deux phases de décharge soit trop court pour terminer l'opération de charge, et la charge est alors interrompue alors que les déséquilibres entre éléments ou cellules ne sont pas encore compensés (en cas de présence d'un système d'équilibrage en fin de charge selon l'état de la technique). La répétition de ce phénomène entraîne également une dégradation rapide des performances de la batterie concernée.

La présente invention a pour but de proposer une solution de chargement optimisé, présentant les avantages précités et surmontant les inconvénients mentionnés précédemment en regard de l'état de la technique existant.

A cet effet, invention a pour objet un procédé de chargement équilibré présentant les caractéristiques de la revendication 1.

L'instant $t_1$ à partir duquel intervient le chargement contrôlé des différentes cellules de la batterie pourra être soit fixé par fabrication, soit résulter d'un réglage unique après fabrication ou éventuellement être réglable par l'utilisateur ou par une personne habilitée (personnel de maintenance spécialisé).

Il est bien évident que plus l'Instant $t_1$ sera proche de l'instant $t_0$ de début d'opération de charge, plus vite les niveaux de charge des différentes cellules seront équilibrés et égalisés et donc les déséquilibres importants évités, notamment en cas d'interruption du chargement avant sa fin normale (incident de chargement, dysfonctionnement, coupure volontaire de la charge par l'utilisateur, ...).

Ainsi, en tenant compte de ces dernières considérations, l'instant $t_1$ pourra être fixé immédiatement après exécution d'un certain nombre de tests des moyens de chargement et des cellules, consécutive au début d'une opération de chargement.

Toutefois, Il peut également être prévu, lorsque les différentes cellules présentent des caractéristiques très similaires et/ou lorsqu'aucune contrainte de limitation du temps de chargement n'est susceptible d'intervenir, que l'instant $t_1$ soit décalé temporellement de l'instant $t_0$ d'une fraction de la durée de chargement maximale théorique des cellules de la batterie, limitant ainsi la phase d'alimentation contrôlée avec éventuel équilibrage des différentes cellules, ainsi que le nombre de cycles des différentes opérations séquentielles de mesure, d'évaluation et d'alimentation différenciée.

Enfin, il peut aussi être prévu que l'instant $t_1$ varie au cours de la durée de vie de la batterie, en étant relativement éloigné de l'instant $t_0$ de début de charge ou de recharge lorsque la batterie est neuve et en étant plus proche de cet instant $t_0$ en fin de vie de ladite batterie (généralement après plusieurs centaines de cycles de charge/décharge).

En effet, pour une batterie neuve, de bonne qualité, les différentes cellules la composant font généralement état de propriétés et de caractéristiques sensiblement similaires.

Par conséquent, leurchargement s'effectue de manière quasi équilibrée et seul un léger équilibrage par alimentation différenciée est nécessaire en fin de charge.

Toutefois, les batteries vieillissantes, même celles ayant présenté des cellules quasi similaires à l'état neuf, font état de cellules dont les caractéristiques et les propriétés sont nettement différentes entre elles et qui aboutissent en fin de charge à des niveaux de charge très variables en l'absence de compensation ou d'équilibrage lors de la charge. Dans ce cas, le chargement équilibré selon l'invention devra intervenir dès une phase précoce du chargement, voire pratiquement immédiatement après le début de l'opération de charge ou de recharge.

Ainsi, il peut éventuellement être prévu une modification automatique, par exemple par décrémentation à chaque nouvelle opération de charge de l'intervalle temporel $t_1 - t_0$, de l'instant $t_1$ de chargement équilibré selon l'invention, le chargement entre $t_0$ et $t_1$ pouvant alors s'effectuer de manière classique, sans contrôle et ajustement éventuel de l'alimentation des différentescellules.

Il pourra éventuellement également être prévu un test en début d'utilisation d'une batterie neuve ou avant son expédition par le fabricant, indiquant ou fixant une valeur $t_1$ initiale ou un paramètre permettant de déterminer cette valeur.

Ainsi, l'intervalle $t_1 - to$ pourra varier, par exemple, de pratiquement quelques secondes à plusieurs dizaines de pourcents de la durée totale théorique de la charge de la batterie.

Conformément à l'invention et, en mettant en oeuvre une solution faisant intervenir un traitement numérique des signaux et une gestion du procédé par une unité de traitement numérique, la surveillance des niveaux de charge est effectuée par mesures répétées et l'alimentation différenciée appliquée pendant une durée prédéfinie, en cas de vérification des conditions de déséquilibre de niveaux de charge requises.

Cette solution permet de simplifier à la fois l'implémentation matérielle et logicielle nécessaire à la mise en oeuvre du procédé.

En relation avec l'invention, le procédé consiste à enclencher pour chaque cellule de la batterie, les unes après les autres, de façon séquentielle pendant une durée fractionnaire du temps total de charge de la batterie, des séquences comprenant une évaluation rafraîchie du niveau de la charge de la cellule considérée, suivie, en fonction de son niveau de charge et par rapport à l'ensemble des niveaux de charge des autres cellules de la batterie, d'une alimentation uniforme ou différenciée, cela suivant un cycle répétitif à partir de l'instant $t_1$ ettout au long du déroulement consécutif de l'opération de charge.

Selon un mode de réalisation avantageux de l'invention, ledit procédé comprend au moins l'exécution des opérations suivantes sous la gestion d'une unité de traitement numérique, et ce à partir de l'instant $t_1$ :

- évaluation, préférentiellement à intervalles réguliers, de la quantité d'énergie emmagasinée dans chaque cellule parla mesure d'un paramètre indicatif de ladite quantité ;
- analyse comparative des différentes quantités d'énergie évaluées ou des différentes valeurs du paramètre mesuré ;
- détermination de lacellule la plus en retard de charge et, le cas échéant, de la ou des cellules la ou les plus en avance de charge ;
- alimentation des différentes cellules montées en série de manière uniforme ou avec limitation du courant de charge pour les cellules autres que celle la plus en retard de charge ou pour la ou les cellule(s) la (les) plus en avance de charge, par dérivation de la totalité ou d'une partie dudit courant au niveau de cette ou de ces dernière(s) ;
- répétition séquentielle des différentes opérations précitées jusqu'à l'obtention d'un état de fin de charge de la batterie ou de la détection d'un défaut, d'un dysfonctionnement ou d'un dépassement de valeur seuil admissible.

Les expériences et travaux de la demanderesse ont démontré qu'un tel procédé d'équilibrage séquentiel permettait d'avoir tous les éléments ou cellules constituant la batterie chargés au même pourcentage à un instant donné de la charge, et a fortiori d'atteindre une capacité de 100 % pour tous les éléments constituant la batterie en fin de charge normale et ceci indépendamment de leur propre capacité.

De même, en cas d'interruption de l'opération de charge avant sa fin normale, un niveau de charge sensiblement identique pour toutes les cellules sera garanti.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 2 des dessins annexés est un schéma synoptique d'un dispositif pour la mise en oeuvre du procédé selon l'invention ;
la figure 3 est un schéma plus détaillé du dispositif représenté sur la figure 2, selon une variante de réalisation de l'invention ;
la figure 4 est un ordinogramme montrant schématiquement les différentes étapes du procédé selon un mode de réalisation de l'invention (dans cet ordinogramme, il faut entendre par le terme "élément", un élément ou une cellule à plusieurs éléments en parallèle) et,
lafigure 5 représente des chronogrammes illustrant, à titre d'exemple non limitatif, pour une batterie de douze cellules, les opérations exécutées durant un cycle de charge avec équilibrage du procédé selon l'invention.

Cette dernière a pour objet un procédé de chargement ou de charge équilibré de n cellules 1, avec n $\geq$ 2, constitutives d'une batterie lithium-ion ou lithium polymère 2 et associées en série, chaque cellule 1 étant composée d'un élément ou de plusieurs éléments montés en parallèle.

Conformément à un mode de réalisation avantageux de l'invention, ce procédé comprend, pour chaque opération de chargement, au moins l'exécution des opérations suivantes sous la gestion d'une unité de traitement numérique, et ce à partir d'un instant $t_1$ postérieur au début de l'opération de chargement :

- évaluation, préférentiellement à intervalles réguliers, de la quantité d'énergie emmagasinée dans chaque cellule 1 par la mesure d'un paramètre indicatif de ladite quantité ;

- analyse comparative des différentes quantités d'énergie évaluées ou des différentes valeurs du paramètre mesuré ;
- détermination de la cellule 1 la plus en retard de charge et, le cas échéant, de la ou des cellules 1 la ou les plus en avance de charge ;
- alimentation des différentes cellules 1 montées en série de manière uniforme ou avec limitation du courant de charge pour les cellules 1 autres que celle la plus en retard de charge ou pour la ou les cellule (s) 1 la (les) plus en avance de charge, par dérivation de la totalité ou d'une partie dudit courant au niveau de cette ou de ces dernière(s) ;
- répétition séquentielle des différentes opérations précitées jusqu'à l'obtention d'un état de fin de charge de la batterie 2 ou de la détection d'un défaut, d'un dysfonctionnement ou d'un dépassement de valeur seuil admissible.

Préférentiellement, le paramètre mesuré au niveau de chaque cellule 1 et utilisé pour l'évaluation de la quantité d'énergie emmagasinée dans celle-ci, est la tension aux bornes de la cellule 1 considérée.

Comme indiqué précédemment, les limitations du courant de charge peuvent éventuellement affecter toutes les cellules en avance de charge par rapport à la cellule la moins chargée, le cas échéant avec des degrés de limitation d'alimentation différents.

Toutefois, pour étaler davantage les phases actives d'équilibrage, l'invention prévoit avantageusement que seule(s) la ou les cellule(s) dont le ou les niveau(x) de charge est(sont) le(les) plus en avance sur celui de la cellule la moins chargée (pendant une durée fractionnaire n donnée), sera(seront) soumise(s) à une limitation de sa(leur) charge (durant la durée fractionnaire n + 1 suivante). Ainsi, les cellules dont le niveau de charge n'est que faiblement supérieur à celui de la cellule la moins chargée, continueront leur charge normalement.

La discrimination entre les cellules soumises à une limitation temporaire de la charge et celles qui ne le sont pas (pendant une durée fractionnaire de la durée totale de la charge), peut par exemple découler de la situation (en terme de valeurs) des niveaux de charge de ces cellules par rapport à une valeur seuil donnée par [valeur de la charge de la cellule la moins chargée + delta $(\Delta)$].

Par ailleurs, en adoptant la stratégie de limiter le courant de charge des cellules les plus chargées tout au long du déroulement de la charge de la batterie à partir de l'instant $t_1$, au lieu d'attendre la fin de ladite charge, l'invention permet d'éviter tout risque de surchauffe de la batterie 2 du fait d'un équilibrage tardif et de garantir des tensions équilibrées au niveau des cellules 1 en fin de charge.

En outre, en débutant l'équilibrage dès l'instant $t_1$ et en poursuivant son action tout au long de la phase consécutive de l'opération de charge, il est possible de garantir que la batterie soit sensiblement équilibrée peu après l'instant $t_1$ et tout au long de la phase de chargement consécutive, c'est-à-dire même en cas d'interruption de la charge avant son achèvement normal.

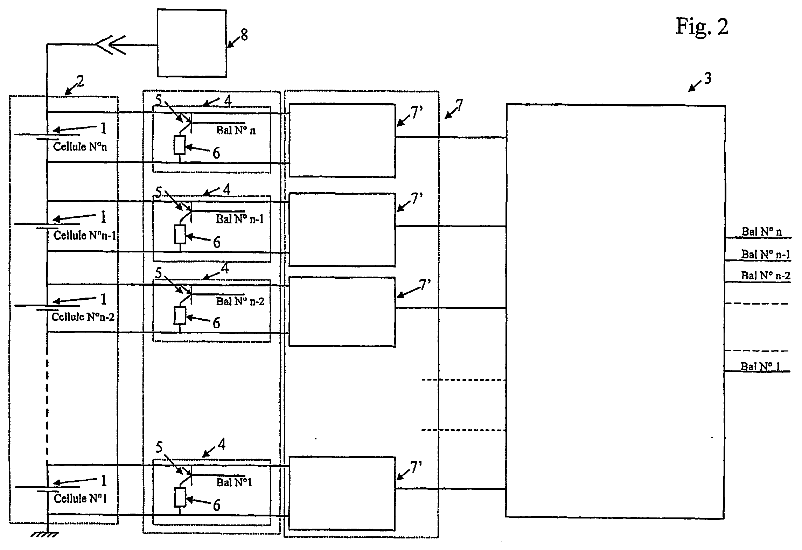

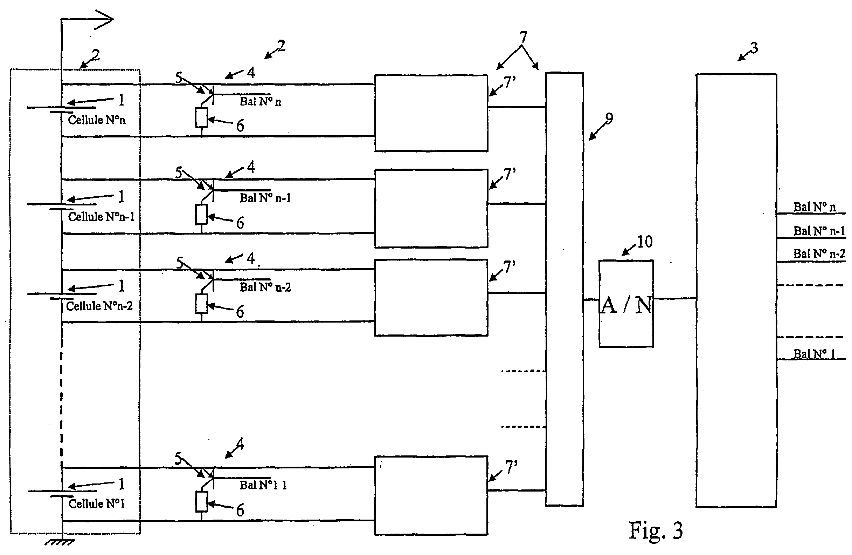

Selon une caractéristique avantageuse de l'invention, la dérivation de courant au niveau de la ou des cellule(s) 1 la (les) plus en avance de charge est réalisée au moyen de circuits de dérivation 4 associés chacun, par un montage en parallèle, à l'une desdites cellules 1 (un circuit 4 pour chaque cellule 1), lesdits circuits 4 intégrant chacun un organe de commutation 5 et, le cas échéant, au moins un composant de dissipation d'énergie électrique 6, éventuellement réglable, tel que par exemple une résistance électrique (figures 2 et 3).

L'organe de commutation 5 pourra, par exemple, être choisi dans le groupe formé par les relais électromécaniques ou électroniques, les transistors bipolaires ou à effet de champ ou analogues.

En outre, la dérivation d'énergie liée à l'équilibrage de charges des différentes cellules 1 étant répartie sur une grande partie, voire le cas échéant la presque totalité de la durée de la charge, le composant de commutation 5, ainsi que le composant de dissipation 6 associé, pourront être optimisés.

Conformément à un mode de réalisation préféré de l'invention, le chargement avec équilibrage séquentiel consiste plus précisément à réaliser, à partir de l'instant $t_1$ et en les répétant tout au long de la charge consécutive de la batterie 2, les opérations suivantes :

a) scruter une par une toutes les cellules 1 de la batterie 2 en mesurant les tensions à leurs bornes, cela sans que les résistances 6 de dérivation ou d'équilibrage ne soient connectées ;

b) détecter la cellule 1 la plus en retard de charge ;

c) détecter les cellules 1 qui, par rapport à la cellule 1 la moins chargée ou la plus en retard de charge, ont une surcharge supérieure à une valeur seuil prédéterminée d'écart de capacité, par exemple correspondant à une différence detension (dVs) de 10 mV ;

d) connecter individuellement chaque cellule 1 détectée avec une surcharge supérieure à la valeur seuil à une résistance d'équilibrage 6 correspondante, de manière à aboutir à une diminution du courant de charge pour chacune des cellules 1 concernées, par exemple d'environ 10 %, pendant une durée séquentielle prédéterminée, par exemple de deux secondes ;

e) à déconnecter les résistances d'équilibrage 6 de toutes les cellules 1 après écoulement de la durée séquentielle prédéterminée ;

f) à effectuer à nouveau les étapes a) à e) après écoulement d'un délai de stabilisation des tensions des cellules 1.

La charge de la batterie est arrêtée normalement lorsque l'intensité du courant de charge global de l'ensemble des cellules de cette dernière descend en dessous d'une valeurseuil prédéfinie, par exemple à 50 mA.

A titre d'exemple de mise en oeuvre pratique de l'invention, les puissances des différents circuits de dérivation 4 sont choisies proches des valeurs fournies par la formule suivante :

$$\text{Psd max} = \frac{\text{V max cell} * \% * \text{AH}}{\text{Tc}}$$

dans laquelle :

Psd max = puissance maximum optimisée à dissiper exprimée en watt ;

Vmax cell = tension maximum mesurée durant la charge aux bornes d'une cellule exprimée en volt ;

% = rapport exprimé en pourcentage, correspondant à l'écart maximum entre deux cellules que l'on souhaite rattraper sur une charge ;

AH = capacité nominale batterie exprimée en Ah (Ampère- heure) ;

Tc = temps de charge batterie exprimé en heure.

De plus, pour aboutir à une régulation précise et progressive de la charge de chaque cellule 1, la tension aux bornes de chaque cellule 1 est mesurée de manière précise par un ensemble 7 de modules de mesure 7' correspondant, dont les signaux de sortie sont transmis, avantageusement après numérisation, à l'unité de traitement numérique 3, cette dernière commandant, dans le cycle suivant, les organes de commutation 5 des différents circuits de dérivation 4 en fonction de l'évolution comparative desdits signaux de sortie fournis par les modules 7'.

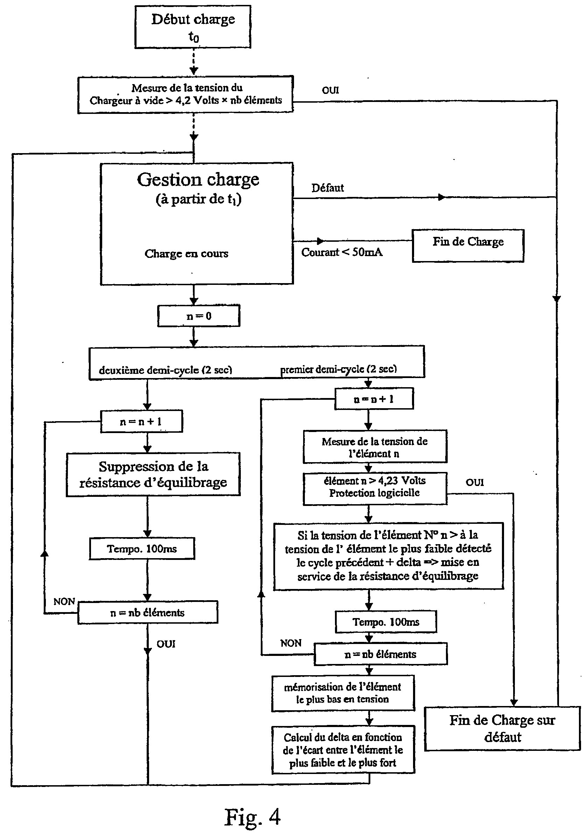

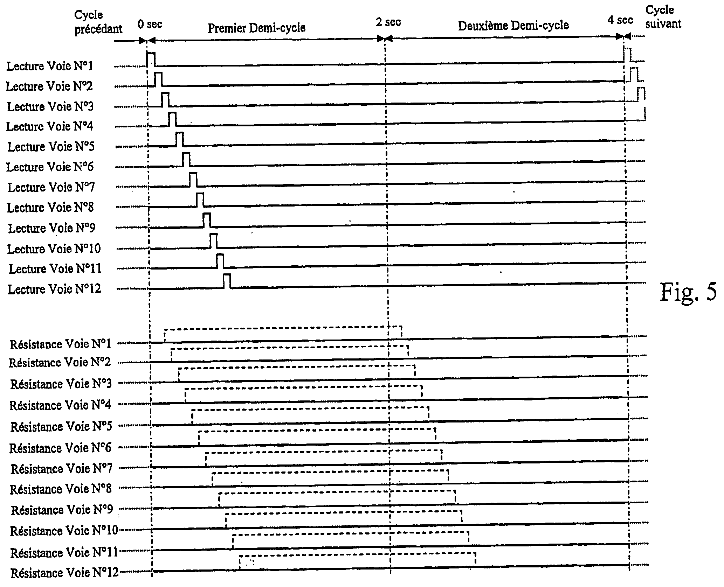

Conformément à un mode de réalisation très avantageux de l'invention, ressortant à titre d'exemple des figures 4 et 5, les opérations sont répétées, à partir de l'instant $t_1$ et durant toute l'opération de charge consécutive à cet instant, en tant que boucle cyclique formée de deux demi-cycles opérationnels, exécutés successivement à chaque bouclage de cycle, un premier demi-cycle comprenant l'exécution consécutive des opérations suivantes : lecture successive des tensions des différentes cellules 1 et enclenchement, décalé dans le temps, de la résistance d'équilibrage 6 pour chaque cellule 1 dont la différence de tension (dV) d'avec la cellule 1 la plus en retard de charge du cycle précédent est supérieure à une valeurseuil (dVs), et le second demi-cycle comprenant les opérations suivantes : déconnexions successives des résistances d'équilibrage 6 des différentes cellules 1 et attente de la stabilisation des tensions des différentes cellules 1 avant leur lecture durant le premier demi-cycle du cycle suivant, les deux demi-cycles présentant préférentiellement des durées sensiblement similaires, par exemple d'environ 2s.

Grâce aux répétitions cycliques des opérations des deux demi-cycles (avec une durée de cycle de par exemple 4 s), tout au long de la procédure de charge de la batterie 2 à partir de l'instant $t_1$, c'est-à-dire jusqu'à l'occurrence d'un événement de fin de charge ou d'une information de sécurité, toutes les cellules 1 (et l'élément ou les éléments composant chacune de ces dernières) présentent à tout moment une faible dispersion de capacité (du fait des connexions de charge constantes entre cellules) et récupèrent de manière optimale le maximum de leurs performances.

En outre, le procédé selon l'invention permet d'accepter en début de charge des différences de niveaux de charge importantes entre cellules 1, le "rattrapage" ou l'équilibrage étant réparti sur la durée s'écoulant entre l'instant $t_1$ et la fin de la procédure de charge de la batterie 2.

Selon une première variante, il peut être prévu que la valeur seuil de différence de tension dVs consiste en une première valeurfixe prédéterminée V1, par exemple 10 mV, si la différence de tension dV entre la tension de la cellule 1 présentant la tension la plus élevée et la tension de la cellule 1 présentant la tension la plus faible est inférieure à une deuxième valeurfixe prédéterminée V2, supérieure à la première valeur seuil prédéterminée V1, par exemple 100 mV.

En outre, il peut alors également être prévu que, si la différence de tension dV entre la tension de la cellule 1 présentant la tension la plus élevée et la tension de la cellule 1 présentant la tension laplusfaible estsupérieure à une deuxième valeurfixe prédéterminée V2, par exemple 100 mV, la valeur seuil de différence de tension dVs consiste en une troisième valeur fixe prédéterminée V3 inférieure à ladite deuxième valeur V2, par exemple 30 mV.

Préférentiellement, la troisième valeur fixe prédéterminée V3 est supérieure à ladite première valeur fixe prédéterminée V1.

Selon une seconde variante, il peut, de manière alternative, être prévu que la valeur seuil de différence de tension dVs correspond à une fraction donnée de la différence de tension dV, mesurée durant le cycle précédent entre la tension de la cellule 1 présentant la tension la plus élevée et la tension de la cellule 1 présentant la tension la plus faible, si durant le cycle en cours ladite différence de tension dV est encore supérieure à une quatrième valeurfixe prédéterminée V4, par exemple 10 mV.

Avantageusement dans chacune des deux variantes précitées, et comme déjà mentionné précédemment, les mesures des tensions au niveau des différentes cellules 1 ne sont effectuées, à chaque fois, qu'après écoulement d'un délai donné, par exemple 2 secondes, suite à la suppression des dérivations de courant, de manière à autoriser une stabilisation des tensions aux bornes desdites cellules 1.

Afin de préserver les cellules 1 de la batterie 2 de possibles expositions à des surtensions, le programme de gestion de la charge, dont l'ordinogramme peut par exemple correspondre àcelui représenté sur la figure 4, peut comporter l'exécution d'un certain nombre de tests avant le début de la charge et au cours et en fin de charge.

Ainsi, le procédé de charge peut consister, au début, avant le démarrage de l'exécution des opérations de chargement, à mesurer la tension à vide Vo du chargeur 8 branché sur la batterie 2 en vue de sa charge, et à arrêter ledit procédé de charge, avec éventuellement déclenchement d'une alarme correspondante et/ou affichage d'un message, si ladite tension à vide Vo est supérieure à [n x tension maximale admissible Vmax pour chaque cellule 1].

De même, ledit procédé peut également consister avant l'exécution d'une boucle ou d'un cycle suivant(e), à vérifier si l'une au moins des cellules 1 de la batterie 2 présente à ses bornes une tension supérieure à la tension maximale admissible Vmax (par exemple et non limitativement 4,23 V) et, dans l'affirmative, à interrompre le procédé de charge, éventuellement avec déclenchement d'une alarme correspondante et/ou affichage d'un message.

La présente invention a également pour objet un dispositif pour la mise en oeuvre du procédé décrit précédemment, dont les principaux éléments constitutifs sont représentés schématiquement sur les figures 2 et 3.

Ce dispositif est essentiellement constitué, d'une part, par un ensemble 7 de modules 7' de mesure de la tension associés chacun à une des cellules 1 en série formant la batterie 2 et mesurant les tensions aux bornes de celles-ci, d'autre part, par une pluralité de circuits de dérivation 4 montés chacun en parallèle aux bornes d'une cellule 1 correspondante et pouvant chacun être ouvert et fermé sélectivement, et, enfin par une unité 3 de traitement numérique et de gestion du procédé, ladite unité 3 recevant les signaux de mesure dudit ensemble 7 de modules de mesure de la tension 7' et commandant l'état [fermé / ouvert] de chaque circuit de dérivation 4.

Les modules 7' consisteront par exemple en des circuits de mesure différentielle de tension à amplificateur opérationnel, avec une précision de mesure d'au moins 50 mV.

Avantageusement, chaque circuit de dérivation 4 comprend un organe de commutation 5, formant interrupteur et dont l'état est commandé par l'unité de traitement numérique 3 et, le cas échéant, au moins un composant 6 de dissipation d'énergie électrique, tel que par exemple une ou des résistance(s).

Comme le montre la figure 3 des dessins annexés, et selon un mode de réalisation préféré de l'invention, l'ensemble 7 de modules 7' de mesure de la tension comprend, d'une part, n modules analogiques 7' de mesure de la tension, associé chacun directement à une cellule 1 de la batterie 2, d'autre part, à un circuit multiplexeur 9 dont les entrées sont reliées aux sorties desdits modules 7' et, enfin, un circuit convertisseur analogique/numérique 10 relié en entrée à la sortie du circuit multiplexeur 9 et en sortie à l'unité de traitement numérique et de gestion 3.

En relation avec une application préférée, mais non limitative de l'invention, le dispositif représenté sur les figures 2 et 3 peut être avantageusement intégré dans un ensemble d'outil électrique autonome de puissance.

A ce sujet, il convient de noter que les circuits de dérivation 4 associés individuellement aux cellules 1 de la batterie 2, pourront également être utilisés pour éventuellement ajuster les charges desdites cellules 1 à un niveau compatible avec stockage longue durée, sans utilisation, de ladite batterie 2.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

**Revendications**

**1.** Procédé de chargement équilibré de n cellules, avec n ≥ 2, constitutives d'une batterie lithium-ion ou lithium polymère et associées en série, chaque cellule étant composée d'un élément ou de plusieurs éléments montés en parallèle, procédé **caractérisé en ce que**, pour chaque opération de chargement, il consiste à réaliser, de manière continue ou cyclique, à partir d'un instant ($t_1$) postérieur au début de l'opération de chargement concernée et jusqu'à la fin normale ou l'interruption anticipée de cette opération, une surveillance des niveaux de charge des différentes cellules (1), et à effectuer, en fonction de l'évaluation préalable desdits niveaux de charge, soit une alimentation uniforme de toutes les cellules (1), soit un équilibrage desdits niveaux de charge desdites cellules (1) en alimentant ces dernières de manière différenciée en fonction de leurs niveaux de charge courants,

procédé **caractérisé**

**en ce qu'**il consiste à enclencher pour chaque cellule (1) de la batterie, les unes après les autres, de façon séquentielle, pendant une durée fractionnaire du temps total de charge de la batterie (2), des séquences comprenant une évaluation rafraîchie du niveau de la charge de la cellule (1) considérée, suivie, en fonction de son niveau de charge et par rapport à l'ensemble des niveaux de charge des autres cellules (1) de la batterie, d'une alimentation uniforme ou différenciée, cela suivant un cycle répétitif à partir de l'instant ($t_1$) et tout au long du déroulement consécutif de l'opération de charge,

**en ce que** l'équilibrage des niveaux de charge des cellules (1) est réalisé soit par une limitation du courant de charge affectant toutes les cellules en avance de charge par rapport à la cellule la moins chargée, soit par une limitation du courant de charge, durant une durée fractionnaire suivante, de la ou des seule(s) cellule(s) dont le ou les niveau(x) de charge est(sont) le(les) plus en avance sur celui de la cellule la moins chargée pendant une durée fractionnaire courante, **et**

**en ce qu'il met en oeuvre un traitement numérique des signaux et une gestion par une unité de traitement numérique (3), la surveillance des niveaux de charge des cellules (1) étant effectuée par mesures répétées et l'alimentation différenciée appliquée pendant une durée prédéfinie, en cas de vérification des conditions requises de déséquilibre des niveaux de charge.**

**2.** Procédé selon la revendication 1, **caractérisé en ce qu'**il comprend au moins l'exécution des opérations suivantes sous la gestion **de l'**unité de traitement numérique (3), et ce à partir de l'instant ($t_1$) :

    - évaluation, préférentiellement à intervalles réguliers, de la quantité d'énergie emmagasinée dans chaque cellule (1) par la mesure d'un paramètre indicatif de ladite quantité ;

- analyse comparative des différentes quantités d'énergie évaluées ou des différentes valeurs du paramètre mesuré sur chaque cellule (1) ;

- détermination de la cellule (1) la plus en retard de charge et, le cas échéant, de la ou des cellules (1) la ou les plus en avance de charge ;

- alimentation des différentes cellules (1) montées en série de manière uniforme ou avec limitation du courant de charge pour les cellules (1) autres que celle la plus en retard de charge ou pour la ou les cellule(s) (1) la (les) plus en avance de charge, par dérivation de la totalité ou d'une partie dudit courant au niveau de cette ou de ces dernière(s) ;

- répétition séquentielle des différentes opérations précitées jusqu'à l'obtention d'un état de fin de charge de la batterie (2) ou de la détection d'un défaut, d'un dysfonctionnement ou d'un dépassement de valeur seuil admissible.

3. Procédé selon la revendication 2, **caractérisé en ce que** le paramètre mesuré au niveau de chaque cellule (1) et utilisé pour l'évaluation de la quantité d'énergie emmagasinée dans celle-ci, est la tension aux bornes de la cellule (1) considérée.

4. Procédé selon la revendication 2 ou la revendication 3, **caractérisé en ce que** la dérivation de courant au niveau de la ou des cellule(s) (1) la (les) plus en avance de charge est réalisée au moyen de circuits de dérivation (4) associés chacun, par un montage en parallèle, à l'une desdites cellules (1), lesdits circuits (4) intégrant chacun un organe de commutation (5) et, le cas échéant, au moins un composant de dissipation d'énergie (6), éventuellement réglable, tel que par exemple une résistance électrique.

5. Procédé selon les revendications 2 et 4, **caractérisé en ce que** le chargement avec équilibrage séquentiel consiste plus précisément à réaliser, à partir de l'instant $(t_1)$ et en les répétant tout au long de la charge consécutive de la batterie (2), les opérations suivantes :

    a) scruter une par une toutes les cellules (1) de la batterie (2) en mesurant les tensions à leurs bornes, cela sans que les résistances (6) de dérivation ou d'équilibrage ne soient connectées ;
    b) détecter la cellule (1) la plus en retard de charge ;
    c) détecter les cellules (1) qui, par rapport à la cellule (1) la moins chargée ou la plus en retard de charge, ont une surcharge supérieure à une valeur seuil prédéterminée d'écart de capacité, par exemple correspondant à une différence de tension (dVs) de 10 mV ;
    d) connecter individuellement chaque cellule (1) détectée avec une surcharge supérieure à la valeur seuil à une résistance d'équilibrage (6) correspondante, de manière à aboutir à une diminution du courant de charge pour chacune des cellules (1) concernées, par exemple d'environ 10 %, pendant une durée séquentielle prédéterminée, par exemple de deux secondes ;
    e) à déconnecter les résistances d'équilibrage (6) de toutes les cellules (1) après écoulement de la durée séquentielle prédéterminée ;
    f) à effectuer à nouveau les étapes a) à e) après écoulement d'un délai de stabilisation des tensions des cellules (1).

6. Procédé selon l'une quelconque des revendications 1 à 5, **caractérisé en ce que** la charge de la batterie (2) est arrêtée normalement lorsque l'intensité du courant de charge global de l'ensemble des cellules (1) de cette dernière descend en dessous d'une valeur seuil prédéfinie, par exemple à 50 mA.

7. Procédé selon l'une quelconque des revendications 4 et 5, **caractérisé en ce que** la tension aux bornes de chaque cellule (1) est mesurée de manière précise par un ensemble (7) de modules de mesure (7') correspondant, dont les signaux de sortie sont transmis, avantageusement après numérisation, à l'unité de traitement numérique (3), cette dernière commandant, dans le cycle suivant, les organes de commutation (5) des différents circuits de dérivation (4) en fonction de l'évolution comparative desdits signaux de sortie fournis par les modules (7').

8. Procédé selon l'une quelconque des revendications 2 à 5, **caractérisé en ce que** les opérations sont répétées, à partir de l'instant $(t_1)$ et durant toute l'opération de charge consécutive, en tant que boucle cyclique formée de deux demi-cycles opérationnels, exécutés successivement à chaque bouclage de cycle, un premier demi-cycle comprenant l'exécution consécutive des opérations suivantes : lecture successive des tensions des différentes cellules (1) et enclenchement, décalé dans le temps, de la résistance d'équilibrage (6) pour chaque cellule (1) dont la différence de tension (dV) d'avec la cellule (1) la plus en retard de charge du cycle précédent est supérieure à une valeur seuil (dVs), et le second demi-cycle comprenant les opérations suivantes : déconnexions successives des résistances d'équilibrage (6) des différentes cellules (1) et attente de la stabilisation des tensions des différentes cellules (1) avant leur lecture durant le premier demi-cycle du cycle suivant, les deux demi-cycles présentant préférentiellement des durées sensiblement similaires, par exemple d'environ 2s.

**9.** Procédé selon la revendication 8, **caractérisé en ce que** la valeur seuil de différence de tension (dVs) consiste en une première valeur fixe prédéterminée (VI), par exemple 10 mV, si la différence de tension (dV) entre la tension de la cellule (1) présentant la tension la plus élevée et la tension de la cellule (1) présentant la tension la plus faible est inférieure à une deuxième valeur fixe prédéterminée (V2), supérieure à la première valeur seuil prédéterminée (V1), par exemple 100 mV.

**10.** Procédé selon la revendication 9, **caractérisé en ce que**, si la différence de tension (dV) entre la tension de la cellule (1) présentant la tension la plus élevée et la tension de la cellule (1) présentant la tension la plus faible est supérieure à une deuxième valeur fixe prédéterminée (V2), par exemple 100 mV, la valeur seuil de différence de tension (dVs) consiste en une troisième valeur fixe prédéterminée (V3) inférieure à ladite deuxième valeur (V2), par exemple 30 mV.

**11.** Procédé selon les revendications 9 et 10, **caractérisé en ce que** la troisième valeur fixe prédéterminée (V3) est supérieure à ladite première valeur fixe prédéterminée (V1).

**12.** Procédé selon la revendication 8, **caractérisé en ce que** la valeur seuil de différence de tension (dVs) correspond à une fraction donnée de la différence de tension (dV), mesurée durant le cycle précédent entre la tension de la cellule (1) présentant la tension la plus élevée et la tension de la cellule (1) présentant la tension la plus faible, si durant le cycle en cours ladite différence de tension (dV) est encore supérieure à une quatrième valeur fixe prédéterminée (V4), par exemple 10 mV.

**13.** Procédé selon l'une quelconque des revendications 8 à 12, **caractérisé en ce que** les mesures des tensions au niveau des différentes cellules (1) ne sont effectuées qu'après écoulement d'un délai donné, par exemple 2 secondes, suite à la suppression des dérivations de courant, de manière à autoriser une stabilisation des tensions aux bornes desdites cellules (1).

**14.** Procédé selon la revendication 4 ou l'une quelconque des revendications 5 à 13, prise en combinaison avec la revendication 4, **caractérisé en ce que** les puissances des différents circuits de dérivation (4) sont choisies proches des valeurs fournies par la formule :

$$\text{Psd max} = \frac{\text{V max cell} * \% * \text{AH}}{\text{Tc}}$$

dans laquelle :

Psd max = puissance maximum optimisée à dissiper exprimée en watt ;

Vmax cell = tension maximum mesurée durant la charge aux bornes d'une cellule exprimée en volt ;

% = rapport exprimé en pourcentage, correspondant à l'écart maximum entre deux cellules que l'on souhaite rattraper sur une charge ;

AH = capacité nominale de la batterie exprimée en Ah (Ampèreheure) ;

Tc = temps de charge batterie exprimé en heure.

**15.** Procédé selon l'une quelconque des revendications 2 à 14, **caractérisé en ce qu'**il consiste, au début, avant le démarrage de l'exécution des opérations de charge, à mesurer la tension à vide (Vo) d'un chargeur (8) branché sur la batterie (2) en vue de sa charge, et à arrêter ledit procédé de chargement, avec éventuellement déclenchement d'une alarme correspondante et/ou affichage d'un message, si ladite tension à vide (Vo) est supérieure à [n x tension maximale admissible (Vmax) pour chaque cellule (1)].

**16.** Procédé selon l'une quelconque des revendications 8 à 15, **caractérisé en ce qu'**il consiste avant l'exécution d'une boucle suivante, à vérifier si l'une au moins des cellules (1) de la batterie (2) présente à ses bornes une tension supérieure à la tension maximale admissible (Vmax) et, dans l'affirmative, à interrompre le procédé de chargement, éventuellement avec déclenchement d'une alarme correspondante et/ou affichage d'un message.

**17.** Dispositif pour la mise en oeuvre du procédé selon l'une quelconque des revendications 1 à 16, **caractérisé en ce qu'**il est essentiellement constitué, d'une part, par un ensemble (7) de modules (7') de mesure de la tension associés chacun à une des cellules (1) en série formant la batterie (2) et mesurant les tensions aux bornes de celles-ci, d'autre part, par une pluralité de circuits de dérivation (4) montés chacun en parallèle aux bornes d'une cellule (1) correspondante et pouvant chacun être ouvert et fermé sélectivement, et, enfin par une unité (3) de traitement numérique et de gestion du procédé, ladite unité (3) recevant les signaux de mesure dudit ensemble (7) de modules de mesure de la tension (7') et commandant l'état [fermé / ouvert] de chaque circuit de dérivation (4).

**18.** Dispositif selon la revendication 17, **caractérisé en ce que** chaque circuit de dérivation (4) comprend un organe de commutation (5), formant interrupteur et dont l'état est commandé par l'unité de traitement numérique (3) et, le cas échéant, au moins un composant (6) de dissipation d'énergie électrique, tel que par exemple une ou des résistance(s).

**19.** Dispositif selon l'une quelconque des revendications 17 et 18, **caractérisé en ce que** l'ensemble (7) de modules (7') de mesure de la tension comprend, d'une part, n modules analogiques (7') de mesure de la tension, associé chacun directement à une cellule (1) de la batterie (2), d'autre part, à un circuit multiplexeur (9) dont les entrées sont reliées aux sorties desdits modules (7') et, enfin, un circuit convertisseur analogique/numérique (10) relié en entrée à la sortie du circuit multiplexeur (9) et en sortie à l'unité de traitement numérique et de gestion (3).

**20.** Dispositif selon l'une quelconque des revendications 17 à 19, **caractérisé en ce qu'**il est intégré dans un ensemble d'outil électrique autonome de puissance.

## Patentansprüche

**1.** Verfahren zum ausgewogenen Aufladen von n Zellen, wobei $n \geq 2$, die eine Lithiumionen- oder Lithium-Polymer-Batterie bilden und in Reihe verbunden sind, wobei jede Zelle aus einem Element oder mehreren Elementen besteht, die parallel montiert sind, wobei das Verfahren **dadurch gekennzeichnet ist, dass** es für jeden Aufladevorgang darin besteht, von dem Moment ($t_1$) nach dem Start des betreffenden Aufladevorgangs und bis zu dem normalen Abschluss oder dem erwarteten Abbruch dieses Vorgangs kontinuierlich oder zyklisch eine Überwachung der Aufladestände verschiedener Zellen (1) vorzunehmen und in Abhängigkeit von der vorherigen Bewertung der Aufladestände entweder eine gleichmäßige Speisung aller Zellen (1) oder einen Abgleich der Aufladestände der Zellen (1), indem diese letzteren in Abhängigkeit von ihren aktuellen Aufladeständen unterschiedlich gespeist werden, durchzuführen, wobei das Verfahren **dadurch gekennzeichnet ist, dass** es darin besteht, für jede Zelle (1) der Batterie nacheinander sequentiell während eines Teilzeitraums der Gesamtaufladezeit der Batterie (2) Sequenzen zu starten, die eine aufgefrischte Bewertung des Aufladestands der betrachteten Zelle (1) umfassen, worauf in Abhängigkeit von deren Aufladestand und im Hinblick auf die Gesamtheit der Aufladestände der anderen Zellen (1) der Batterie eine gleichmäßige oder eine unterschiedliche Speisung folgt, diese einem Wiederholungszyklus von dem Moment ($t_1$) und während des gesamten folgenden Ablaufs des Aufladevorgangs folgen, dass die Gleichgewichtung der Ladeniveaus der Zellen (1) entweder durch eine Begrenzung des Ladestroms, die alle Zellen, die einen Ladevorsprung gegenüber der am geringsten geladenen Zelle erzielt wird, oder durch eine Begrenzung des Ladestroms, während einer folgenden Teildauer, der Zelle(n) dessen(deren) Ladeniveau(s) den(die) grössten Ladevorsprünge, während einer jetzigen Teildauer, aufweisen, und dass eine digitale Verarbeitung der Signale und eine Verwaltung pro digitale Verarbeitungseinheit (3) eingreift, wobei die Überwachung der Ladeniveaus der Zellen (1) mit Hilfe von wiederholten Messungen und einer differenzierten Versorgung mit Strom während eines vorbestimmten Zeitraums ausgeführt wird, falls die erforderlichen Bedingungen des Ungleichgewichts der Ladeniveaus vorliegen.

**2.** Verfahren nach Anspruch 1, **dadurch gekennzeichnet, dass** es mindestens die Ausführung der folgenden Vorgänge unter der Lenkung durch eine digitale Verarbeitungseinheit (3) und dies von dem Moment ($t_1$):

   - Bewertung, vorzugsweise in regelmäßigen Abständen, der Energiemenge, die in jeder Zelle (1) gespeichert ist, durch Messung eines Parameters, der die Menge anzeigt;
   - Vergleichsanalyse verschiedener bewerteter Energiemengen oder verschiedener Werte des an jeder Zelle (1) gemessenen Parameters;
   - Bestimmung der Zelle (1), die mit dem Aufladen am langsamsten ist, und gegebenenfalls der Zelle oder Zellen (1), die mit dem Aufladen am weitesten fortgeschritten ist bzw. sind;
   - Speisung der unterschiedlichen Zellen (1), die in Reihe montiert sind, gleichmäßig oder mit Begrenzung des Ladungsstroms für die Zellen (1), bei denen es sich nicht um die mit dem Aufladen am langsamsten handelt, oder für die Zelle(n) (1), die mit dem Aufladen am weitesten fortgeschritten ist (sind), durch Ableitung der Gesamtheit oder eines Teils des Stroms auf den Stand dieser letzteren;
   - sequentielle Wiederholung der verschiedenen oben genannten Vorgänge bis zum Erlangen eines Endaufladezustands der Batterie (2) oder zum Erkennen eines Fehlers, einer Funktionsstörung oder einer Überschreitung des zulässigen Schwellenwerts.

**3.** Verfahren nach Anspruch 2, **dadurch gekennzeichnet, dass** es sich bei dem Parameter, der hinsichtlich jeder Zelle (1) gemessen und zur Bewertung der Energiemenge, die in dieser gespeichert ist, verwendet wird, um die Spannung an den Klemmen der betrachteten Zelle (1) handelt.

**4.** Verfahren nach Anspruch 2 oder 3, **dadurch gekennzeichnet, dass** die Stromableitung hinsichtlich der Zelle(n) (1), die mit dem Aufladen am weitesten fortgeschritten ist (sind), mittels Ableitungsstromkreisen (4), die jeweils durch parallele Montage mit einer der Zellen (1) verbunden sind, vorgenommen wird, wobei die Stromkreise (4) jeweils ein Schaltelement (5) und gegebenenfalls mindestens eine Energieablenkungskomponente (6), gegebenenfalls regulierbar, wie beispielsweise einen elektrischen Widerstand, integriert.

5. Verfahren nach Anspruch 3 und 4, **dadurch gekennzeichnet, dass** das Aufladen mit sequentiellem Abgleich insbesondere darin besteht, dass von dem Moment ($t_1$) die folgenden Vorgänge vorgenommen und diese während des gesamten folgenden Aufladens der Batterie (2) wiederholt werden:

   a) Prüfen aller Zellen (1) der Batterie (2) durch Messen der Spannungen an ihren Klemmen, ohne dass dabei die Ableitungs- oder Abgleichswiderstände (6) angeschlossen sind;
   b) Erfassen der Zelle (1), die mit dem Aufladen am langsamsten ist;
   c) Erfassen der Zellen (1), die in Bezug auf die Zelle (1), die am wenigsten aufgeladen ist oder mit dem Aufladen am langsamsten ist, eine Überladung aufweisen, die höher als ein vorher bestimmter Kapazitätsabweichungsschwellenwert ist, der beispielsweise einer Spannungsdifferenz (dVs) von 10 mV entspricht;
   d) individuelles Anschließen jeder erfassten Zelle (1) mit einer Überladung, die höher als ein vorher bestimmter Schwellenwert ist, an einen entsprechenden Abgleichswiderstand (6), so dass eine Verringerung des Ladungsstroms für die betreffenden Zellen (1), beispielsweise um ungefähr 10 %, während einer vorher bestimmten sequentiellen Zeitdauer, beispielsweise zwei Sekunden, herbeigeführt wird;
   e) Abziehen der Abgleichswiderstände (6) von allen Zellen (1) nach Ablauf der vorher bestimmten sequentiellen Zeitdauer;
   f) erneutes Durchführen der Schritte a) bis e) nach Ablauf einer Zeitspanne der Stabilisierung der Spannungen der Zellen (1).

6. Verfahren nach einem der Ansprüche 1 bis 5, **dadurch gekennzeichnet, dass** das Aufladen der Batterie (2) normalerweise gestoppt wird, wenn die Stromstärke der Gesamtaufladung der Gesamtheit der Zellen (1) dieser letzteren unter einen vorher festgelegten Schwellenwert, beispielsweise 50 mA, fällt.

7. Verfahren nach einem der Ansprüche 4 und 5, **dadurch gekennzeichnet, dass** die Spannung an den Klemmen jeder Zelle (1) präzise mit einer entsprechenden Untereinheit (7) von Messmodulen (7') gemessen wird, deren Ausgangssignale vorteilhafterweise nach Digitalisierung an die digitale Verarbeitungseinheit (3) übertragen werden, wobei diese letztere im folgenden Zyklus die Schaltelemente (5) der unterschiedlichen Ableitungsstromkreise (4) in Abhängigkeit von der Vergleichsentwicklung der von den Modulen (7') bereitgestellten Ausgangssignale steuert.

8. Verfahren nach einem der Ansprüche 2 bis 5, **dadurch gekennzeichnet, dass** die Vorgänge von dem Moment ($t_1$) und während des gesamten folgenden Aufladevorgangs als zyklische Schleife wiederholt werden, die von zwei operationellen Halbzyklen gebildet wird, die nacheinander zu jeder Zyklusschleife ausgeführt werden, wobei ein erster Halbzyklus die konsekutive Ausführung der folgenden Vorgänge umfasst: sukzessives Ablesen der Spannungen der unterschiedlichen Zellen (1) und zeitversetztes Einschalten des Abgleichswiderstands (6) für jede Zelle (1), deren Spannungsdifferenz (dV) mit der Zelle (1), die mit dem Aufladen des vorherigen Zyklus am langsamsten ist, höher als ein Schwellenwert (dVs) ist, und der zweite Halbzyklus die folgenden Vorgänge umfasst: sukzessive Abzugsvorgänge der Abgleichswiderstände (6) der unterschiedlichen Zellen (1) und Warten auf die Stabilisierung der Spannungen der unterschiedlichen Zellen (1) vor deren Ablesen während des ersten Halbzyklus des folgenden Zyklus, wobei die zwei Halbzyklen vorzugsweise im Wesentlichen ähnliche Zeitdauern, beispielsweise ungefähr 2 s, aufweisen.

9. Verfahren nach Anspruch 8, **dadurch gekennzeichnet, dass** der Spannungsdifferenz-Schwellenwert (dVs) in einem ersten vorher bestimmten Festwert (V1), beispielsweise 10 mV, besteht, wenn die Spannungsdifferenz (dV) zwischen der Spannung der Zelle (1), die die höchste Spannung aufweist, und der Spannung der Zelle (1), die die niedrigste Spannung aufweist, niedriger als ein zweiter vorher bestimmter Festwert (V2) ist, der höher als der erste vorher bestimmte Festwert (V1) ist, beispielsweise 100 mV.

10. Verfahren nach Anspruch 9, **dadurch gekennzeichnet, dass**, wenn die Spannungsdifferenz (dV) zwischen der Spannung der Zelle (1), die die höchste Spannung aufweist, und der Spannung der Zelle (1), die die niedrigste Spannung aufweist, höher als ein zweiter vorher bestimmter Festwert (V2) ist, beispielsweise 100 mV, der Spannungsdifferenz-Schwellenwert (dVs) in einem dritten vorher bestimmten Festwert (V3) besteht, der niedriger als der zweite Wert (V2) ist, beispielsweise 30 mV.

11. Verfahren nach den Ansprüchen 9 und 10, **dadurch gekennzeichnet, dass** der dritte vorher bestimmte Festwert (V3) höher als der erste vorher bestimmte Festwert (V1) ist.

12. Verfahren nach Anspruch 8, **dadurch gekennzeichnet, dass** der Spannungsdifferenz-Schwellenwert (dVs) einem gegebenen Bruchteil der Spannungsdifferenz (dV) entspricht, die während des vorherigen Zyklus zwischen der Spannung der Zelle (1), die die höchste Spannung aufweist, und der Spannung der Zelle (1), die die niedrigste Spannung aufweist, gemessen wurde, wenn während des ablaufenden Zyklus die Spannungsdifferenz (dV) immer noch höher als ein vierter vorher bestimmter Festwert (V4) ist, beispielsweise 10 mV.

13. Verfahren nach einem der Ansprüche 8 bis 12, **dadurch gekennzeichnet, dass** die Messungen der Spannungen hinsichtlich der unterschiedlichen Zellen (1) nur nach Ablauf einer gegebenen Zeitspanne, beispielsweise 2 Sekunden, auf die die Unterdrückung der Stromableitungen folgt, durchgeführt werden um eine Stabilisierung der Spannungen an den Klemmen der Zellen (1) zu ermöglichen.

14. Verfahren nach Anspruch 4 oder nach einem der Ansprüche 5 bis 13 in Kombination mit Anspruch 4, **dadurch gekennzeichnet, dass** die Leistungen der verschiedenen Ableitungsstromkreise (4) so gewählt werden, dass sie den von der Formel bereitgestellten Werten nahe liegen:

$$Psd\max = \frac{V\max Zelle * \% * AH}{Tc}$$

in der:

Psd max = maximale, zur Abführung optimierte Leistung, die in Watt ausgedrückt ist;
Vmax Zelle = maximale Spannung, die während des Aufladens an den Klemmen einer Zelle gemessen wird und die in Volt ausgedrückt ist;
% = als Prozentsatz ausgedrücktes Verhältnis, das dem maximalen Abstand zwischen zwei Zellen entspricht, der bei einem Aufladen ausgeglichen werden soll;
AH = Nennkapazität der Batterie, die in Ah (Amperestunden) ausgedrückt ist;
Tc = Batterieaufladezeit, die in Stunden ausgedrückt ist.

15. Verfahren nach einem der Ansprüche 2 bis 14, **dadurch gekennzeichnet, dass** es zu Beginn vor Einleitung der Ausführung der Aufladevorgänge darin besteht, dass die Leerlaufspannung (Vo) eines Ladegeräts (8), das an die Batterie (2) angeschlossen ist, im Hinblick auf deren Aufladung gemessen wird und dass das Aufladeverfahren gestoppt wird, mit gegebenenfalls Auslösung eines entsprechenden Alarms und/oder Anzeige einer Nachricht, wenn die Leerlaufspannung (Vo) höher als [n x maximale zulässige Spannung (Vmax) für jede Zelle (1)] ist.

16. Verfahren nach einem der Ansprüche 8 bis 15, **dadurch gekennzeichnet, dass** es vor Ausführung einer folgenden Schleife darin besteht, dass geprüft wird, ob mindestens eine der Zellen (1) der Batterie (2) an ihren Klemmen eine Spannung aufweist, die höher als die maximale zulässige Spannung (Vmax) ist, und dass bei Bejahung das Aufladeverfahren unterbrochen wird, mit gegebenenfalls Auslösung eines entsprechenden Alarms und/oder Anzeige einer Nachricht.

17. Vorrichtung zur Durchführung des Verfahrens nach einem der Ansprüche 1 bis 16, **dadurch gekennzeichnet, dass** sie im Wesentlichen einerseits aus einer Einheit (7) von Spannungsmessmodulen (7'), die mit jeweils einer der Zellen (1) in Reihe, die die Batterie (2) bilden, verbunden sind und die Spannungen an den Klemmen dieser messen, andererseits aus mehreren Ableitungsstromkreisen (4), die jeweils parallel an den Klemmen einer entsprechenden Zelle (1) montiert sind und die jeweils selektiv geöffnet und geschlossen sein können, und schließlich aus einer digitalen Verarbeitungseinheit (3) zur Lenkung des Verfahrens besteht, wobei die Einheit (3) Messsignale von der Einheit (7) der Spannungsmessmodule (7') empfängt und den Zustand [geschlossen/geöffnet] jedes Ableitungsstromkreises (4) steuert.

18. Vorrichtung nach Anspruch 17, **dadurch gekennzeichnet, dass** jeder Ableitungsstromkreis (4) ein Schaltelement (5), das einen Schalter bildet und dessen Zustand von der digitalen Verarbeitungseinheit (3) gesteuert wird, und gegebenenfalls mindestens eine Stromablenkungskomponente (6), wie beispielsweise einen oder mehrere Widerstände, umfasst.

19. Vorrichtung nach einem der Ansprüche 17 und 18, **dadurch gekennzeichnet, dass** die Einheit (7) der Spannungsmessmodule (7') einerseits n analoge Spannungsmessmodule (7'), die jeweils direkt mit einer Zelle (1) der Batterie (2) verbunden sind, andererseits einen Stromkreis-Mehrfachumschalter (9), dessen Eingänge mit den Ausgängen der Module (7') verbunden sind, und schließlich einen Stromkreis-Analog/Digital-Umsetzer (10), der am Eingang mit dem Ausgang des Stromkreis-Mehrfachumschalters (9) und am Ausgang mit der digitalen Verarbeitungseinheit zur Lenkung (3) verbunden ist, umfasst.

20. Vorrichtung nach einem der Ansprüche 17 bis 19, **dadurch gekennzeichnet, dass** sie in eine unabhängige Elektrowerkzeugeinheit integriert ist.

## Claims

1. Process for the balanced charging of n cells, with n $\geq$ 2, constituting a lithium ion or lithium polymer battery and associated in series, each cell being comprised by one or several elements mounted in parallel, which process is **characterized in that** for each charging operation, it consists in providing continuously or cyclically, from an instant $(t_1)$ subsequent to the onset of the charging operation in question and to the normal end or anticipated interruption of this operation, a surveillance of the levels of charge of the different cells (1), and in carrying out, as a function of the mentioned evaluation of said charge levels, either a uniform supply of all the cells (1), or a balancing of said charge levels of said cells (1) by supplying these latter in a differentiated manner as a function of their current levels of charge,

   which process is **characterized in that** it consists in triggering for each cell (1) of the battery, one after the other, in a sequential manner, for a fractional portion of the total charge time of the battery (2), sequences comprising a refreshed evaluation of the level of the charge of the cell (1) in question, followed, as a function of its level of charge and with respect to all the levels of charge of the other cells (1) of the battery, a uniform or differentiated supply, this according to a repeating cycle from the instant $(t_1)$ and throughout the following course of the operation of charging,

   **in that** the balancing of the charge levels of the cells (1) is performed either through a limitation of the charging current affecting all the cells in advance of charging relative to the least charged cell, or through a limitation, during a following fractional duration, of the cell or cells of the most advanced charge level relative to the least charged cell during the current fractional duration, and

   **in that** it uses a digital processing of the signals and a management of the process by a digital processing unit (3), the surveillance of the charge levels of the cells (1) being carried out by repeated measurements and the differentiated supply applied during a predefined time, in case of verification of the required conditions of unbalance of the charge levels.

2. Process according to claim 1, **characterized in that** it comprises at least the execution of the following operations under the management of the digital processing unit (3), and this from the instant $t_1$:

   - evaluation, preferably at regular intervals, of the quantity of energy stored in each cell (1) by measuring a parameter indicative of said quantity;
   - comparative analysis of the different evaluated quantities of energy or of the different values of the measured parameter for each cell (1);
   - determination of the cell (1) tardiest to charge and, as the case may be, of the cell or cells (1) the most advanced in charging;
   - supplying the different cells (1) mounted in series in a uniform manner or with the limitation of charging current for the cells (1) other than the tardiest or for the cell or cells most advanced in charging, by derivation of all or a portion of said current at the level of this or these latter;
   - sequential repetition of the different mentioned operations obtaining an end condition of charge of the battery (2) or the detection of a fault, of a dysfunction or an exceeding of an admissible threshold value.

3. Process according to claim 2, **characterized in that** the measured parameter in each cell (1) and utilized for evaluation of the quantity of energy stored in this latter, is the voltage at the terminals of the cell (1) in question.

4. Process according to claim 2 or claim 3, **characterized in that** the derivation of current in the cell or cells that are most advanced in charging, is carried out by a means of derivation circuits (4) each associated by mounting in parallel with one of said cells (1), said circuits (4) each integrating a switching member (5) and, as the case may be, at least one component for dissipation of energy (6), if desired adjustable, such as for example an electrical resistance.

5. Process according to claims 2 and 4, **characterized in that** charging with sequential balancing consists more precisely in carrying out from the instant $t_1$ and, while repeating them during the course of charging the battery (2), the following operations:

   a) scrutinizing one by one all the cells (1) of the battery (2) by measuring the voltages at their terminals, this without the resistances (6) of derivation or balancing being connected;
   b) detecting the cell (1) tardiest to charge;
   c) detecting the cells (1) which, relative to the least charged or tardiest cell (1), have an overcharge greater than a predetermined threshold value of difference of capacity, for example corresponding to a difference of voltage (dVs) of 10 mV;
   d) individually connecting each cell (1) detected to have a surcharge greater than a threshold value, to a corresponding balancing resistance (6) so as to produce a decrease of the charging current for each of the cells (1) in question, for example of about 10%, during a predetermined sequential duration, for example two seconds;
   e) disconnecting the balancing resistances (6) of all the cells (1) after lapse of the predetermined sequential duration;

f) carrying out again steps a) to e) after the elapse of a stabilization delay of the voltages of the cells (1).

6. Process according to any one of claims 1 to 5, **characterized in that** the charging of the battery (2) is normally stopped when the current intensity of the overall charge of the assembly of cells (1) of this latter descends below a predetermined threshold value, for example 50 mA.

7. Process according to any one of claims 4 and 5, **characterized in that** the voltage at the terminals of each cell (1) is measured precisely by an assembly (7) of corresponding measurement modules (7'), whose output signals are transmitted, preferably after digitization, to the digital processing unit (3), this latter controlling, in the following cycle, the switching members (5) of the different derivation circuits (4) as a function of the comparative development of said output signals provided by the modules (7').

8. Process according to any one of claims 2 to 5, **characterized in that** the operations are repeated, from the instant ($t_1$) and during all the charging operation, as a cyclic loop formed by two operational half cycles, carried out successively at each cycle loop, a first half cycle comprising the consecutive execution of the following operations: successive reading of the voltages of the different cells (1) and triggering, offset in time, the balancing resistance (6) for each cell (1) whose voltage difference (dV) with the tardiest cell of the preceding cycle is greater than a threshold value (dVs), and the second half cycle comprising the following operations: successive disconnection of the balancing resistances (6) of the different cells (1) and waiting for the stabilization of the voltages of the different cells (1) before their reading during the first half cycle of the following cycle, the two half cycles preferably having substantially similar durations, for example about 2 seconds.

9. Process according to claim 8, **characterized in that** the threshold value of voltage difference (dVs) consists in a first predetermined fixed value (VI), for example 10 mV, if the voltage difference (dV) between the voltage of the cell (1) having the highest voltage and the voltage of the cell (1) having the least voltage is less than a second predetermined fixed value (V2), greater than the first predetermined threshold value (V1), for example 100 mV.

10. Process according to claim 9, **characterized in that**, if the voltage difference (dV) between the voltage of the cell (1) having the highest voltage and the voltage of the cell (1) having the lowest voltage is greater than a second predetermined fixed value (V2), for example 100 mV, the threshold value of voltage difference (dVs) consists of a third predetermined fixed value (V3) less than said second value (V2), for example 30 mV.

11. Process according to claims 9 and 10, **characterized in that** the third predetermined fixed value (V3) is greater than said first predetermined fixed value (V1).

12. Process according to claim 8, **characterized in that** the threshold value of the difference of voltage (dVs) corresponds to a given fraction of the voltage difference (dV), measured during the preceding cycle between the voltage of the cell (1) having the highest voltage and the voltage of the cell (1) having the lowest voltage, if during the cycle taking place, said voltage difference (dV) is still higher than a fourth predetermined fixed value (V4), for example 10 mV.

13. Process according to any one of claims 8 to 12, **characterized in that** the measurements of the voltages of the different cells (1) are carried out only after the elapse of a give delay, for example 2 seconds, following the suppression of the current derivations, so as to permit stabilization of the voltages at the terminals of said cells (1).

14. Process according to claim 4 or any one of claims 5 to 13, taken in combination with claim 4, **characterized in that** the powers of the different derivation circuits (4) are selected to be near the values provided by the formula:

$$\text{Psd max} = \frac{\text{V max cell} * \% * \text{AH}}{\text{Tc}}$$

in which:

Psd max = maximum power optimized to dissipate, expressed in watts;
Vmax cell = maximum voltage measured during charging at the terminals of a cell, expressed in volts;
% = ratio expressed in percentage, corresponding to the maximum difference between two cells to compensate during charging;
AH = nominal capacitance of the battery expressed in Ah (Ampere-hours);
Tc = battery charge time expressed in hours.

15. Process according to any one of claims 2 to 14, **characterized in that** it consists, at the outset, before triggering the execution of the charging operations, in measuring the standby voltage (Vo) of a charger (8) connected to the battery (2) as to its charge, and stopping said charging process with if desired the triggering of a corresponding arm and/or display of a message, if said standby voltage (Vo) is greater than [n x maximum admissible voltage (Vmax) for each cell (1)].

16. Process according to any one of claims 8 to 15, **characterized in that** it consists, before the execution of a following loop, in verifying whether at least one of the cells (1) of the battery (2) has at its terminals a voltage higher than the maximum admissible voltage (Vmax) and, in the affirmative, in interrupting the process of charging, if desired with the triggering of a corresponding alarm and/or display of a message.

17. Device for the practice of a process according to any one of claims 1 to 16, **characterized in that** it is essentially constituted, on the one hand, by an assembly (7) of modules (7') for measuring the voltage associated each with one of the cells (1) in series forming the battery (2) and measuring the voltages at the terminals of these latter, on the other hand, by a plurality of derivation circuits (4) each mounted in parallel with the terminals of a corresponding cell (1) and each being adapted to be opened and closed selectively, and, finally, by a digital processing unit (3) for managing the process, said unit (3) receiving measurement signals from said assembly (7) of measuring modules of the voltage (7') and controlling the condition [closed/open] of each derivation circuit (4).

18. Device according to claim 17, **characterized in that** each derivation circuit (4) comprises a switching member (5), forming a switch whose condition is controlled by the digital processing unit (3) and, as the case may be, at least one component (6) for dissipation of electrical energy, such as for example one or more resistances.

19. Device according to any one of claims 17 and 18, **characterized in that** the assembly (7) of modules (7') for measurement of the voltage comprises, on the one hand, n analog modules (7') for measuring the voltage, each associated directly with a cell (1) of the battery (2), on the other hand, in a multiplexing circuit (9) whose inputs are connected to the outputs of said modules (7') and, finally, an analog/digital converter circuit (10) connected at its input to the output of the multiplexer circuit (9) and at its output to the digital processing and management unit (3).

20. Device according to any one of claims 17 to 19, **characterized in that** it is integrated into an assembly of a self-contained electric power tool.

Fig. 1

EP 1 854 165 B3

Fig. 2

Fig. 3

EP 1 854 165 B3

Fig. 4

Fig. 5

**EP 1 854 165 B3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2372645 A

- US 5773959 A